# FASCICULE DE BREVET EUROPEEN

(11) **EP 0 621 457 B1**
(45) Date de publication et mention de la délivrance du brevet: **20.08.1997**
(21) Numéro de dépôt: 94470012.9
(22) Date de dépôt: 13.04.1994
(51) Int. Cl.: G01B 7/31, G01D 5/14, B66C 13/06

(54) **Capteur pour la mesure d'un ballant**
Schwingungsmessgerät
Sway measuring device

(30) Priorité: 16.04.1993 FR 9304661
(43) Date de publication de la demande: 26.10.1994
(73) Titulaire: REICHERT TECHNOLOGY SA, 54530 Pagny sur Moselle (FR)
(72) Inventeur: Hensel, Jozef, 30-117 Krakow (PL); Tytko, Andrzej, 31-930 Krakow (PL); Kwasniewski, Jerzy, 30-654 Krakow (PL); Lankosz, Leslaw, 30-069 Krakow (PL)
(74) Mandataire: Poupon, Michel

(56) Documents cités:
- EP-A- 0 124 731
- EP-A- 0 270 322
- EP-A- 0 292 426
- DE-A- 1 756 441
- GB-A- 1 069 630
- US-A- 4 500 867

## Description

L'invention conceme un capteur pour la mesure du ballant d'un câble.

Les capteurs les plus utilisés actuellement pour la mesure du ballant mettent en oeuvre des technologies de contact, ils comportent un ou des capteurs ou instruments placés directement sur le câble ou la charge ce qui nécessite un moyen de liaison entre l'instrument et le moyen d'affichage devant l'utilisateur, ou entre le capteur et l'instrument. Ce moyen de liaison est sujet à pannes et entretiens. De plus, le capteur est difficilement déplaçable et ne donne que des mesures unidirectionnelles.

Pour résoudre tous ces problèmes, la demanderesse a eu l'idée d'utiliser des capteurs à champ magnétique stable qui jusqu'à présent ne pouvaient être utilisés que sur des câbles immobiles.

Pour quc ces capteurs à champ magnétique stable, dont l'entrefer est traversé par un câble en mouvement, donnent des résultats de mesure interprétables, fiables, sans influence de l'hystérésis, il a fallu en modifier la conception.

On connaît par ailleurs un autre type de dispositif à champ magnétique stable décrit dans le document EP 0 270 322. Le capteur comporte d'une part des parties fixes et d'autre part une partie mobile conformée en couronne, fixée au câble, et réalisée en matériau magnétique. Les aimants permanents du capteur sont ainsi conformés en arc de cercle et lors du déplacement du câble selon l'une des directions x ou y, ou lors de la rotation du câble sur lui-même, il se produit un grand défaut de mesure et le déplacement ne peut être mesuré simultanément sur les deux axes.

Des études en laboratoire ont permis d'aboutir à un mode de réalisation nouveau consistant en un capteur à champ magnétique stable comportant une partie fixe et une partie mobile caractérisé en ce que la partie mobile qui peut être fixée sur un câble comporte une couronne formée d'aimants permanents disposés radialement entre une bague magnétique intérieure et une bague magnétique extérieure et que la partie fixe est formée d'éléments de mesure fixés sur un support délimitant un espace de mesure dans lequel se déplace la couronne.

En outre, on peut prévoir sur le support des concentrateurs magnétiques pour obtenir de meilleurs résultats avec des éléments de mesure constitués de capteurs à effet Hall ou de magnétorésistances.

Préférentiellement les aimants sont au nombre de quatre disposés sur deux axes de mesures x et y perpendiculaires.

L'invention sera mieux comprise à l'aide de la description qui suit faite en référence aux figures annexées suivantes :
- **Figures 1 et 2** : croquis en vue latérale et vue de dessus d'un premier mode de réalisation du capteur selon l'invention,
- **Figures 3 et 4** : croquis en vue latérale et vue de dessus d'un deuxième mode de réalisation du capteur selon l'invention.

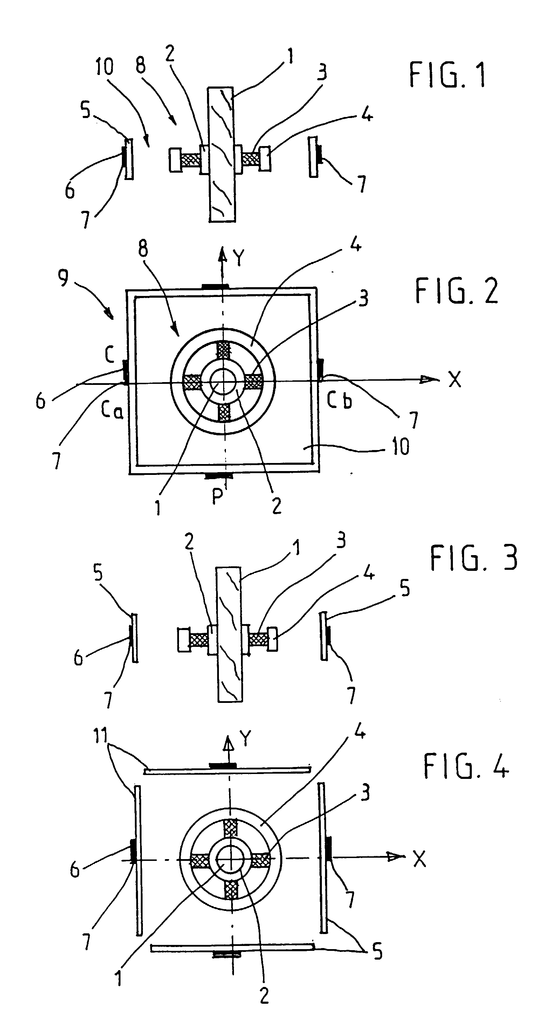

On se reportera d'abord aux figures 1 et 2 d'un premier mode de réalisation non limitatif conforme à l'invention.

Le capteur à champ magnétique stable (9) est installé sur un câble (1) dont on veut surveiller et mesurer le ballant. Le capteur est formé de quatre aimants permanents (3) disposés radialement entre une bague magnétique intérieure (2) et une bague magnétique extérieure (4).

La bague intérieure (2) est fixée au câble (1) et l'ensemble bagues (2,4) - aimants (3) forme une couronne (8) qui se déplace avec le câble.

Le capteur comporte en outre une partie fixe formée d'éléments de mesure (6 ou 7) fixés sur un support (5) en éléments non ferromagnétiques formés par exemple et non limitativement de barrettes disposées en carré autour de la couronne (8), délimitant ainsi un espace de mesure (10) dans lequel se déplace la couronne (8).

On peut utiliser des capteurs simples (6) pour des mesures simples comme par exemple le capteur (C) placé sur le plan YZ et réagissant au mouvement dans la direction X, ou le capteur (P) placé sur le plan XZ et réagissant au mouvement dans la direction Y ou utiliser des capteurs différentiels (7) comme par exemple le couple (Ca-Cb) réagissant au mouvement dans la direction Y, sachant qu'on a pris comme référence le système de coordonnées XYZ où XY représente le plan de mouvement du câble et l'axe Z représente les résultats de mesure.

Les éléments de mesures peuvent être des capteurs à effet Hall, capteurs magnéto-resistifs, inductifs, ultra-soniques, ou autre.

Les figures 3 et 4 représentent un autre mode de réalisation conforme à l'invention.

Il comporte les mêmes éléments que le précédent mais comporte en plus des éléments concentrateurs magnétiques (11) placés sur le support (5) et utilisés avec des éléments de mesure directe (6) ou des éléments de mesure différentielle (7) formés de capteurs à effet Hall.

Les éléments concentrateurs (11) sont fait de matériaux à petite coercibilité par exemple en ARMCO® ou en PERMALLOY® et permettent de diminuer l'influence réciproque des champs sur X et Y.

Pour des éléments de mesures formés de capteurs à effet Hall, on peut étudier les variations de l'induction magnétique à l'intérieur des capteurs à effet Hall au moyen de Gaussmètres classiques, les variations étant produites par le déplacement du câble (1) et de la couronne (8).

Pour des éléments de mesure d'un autre type on utilisera l'appareil de mesure du type correspondant.

On peut aussi traiter les signaux reçus sur les éléments de mesure (6,7) par des procédés informatisés en particulier par celui décrit dans la demande de brevet français 93 02191.

Les avantages et performances de l'invention sont importants et nombreux, on citera notamment :
- simplicité de réalisation,
- facilité de mise en oeuvre et de changement d'implantation sur le câble,
- utilisation d'éléments de mesure fixes d'où absence de points de liaison mobile avec les appareils de mesure, fragilité et entretien diminués,
- pas d'influence de l'hystérésis sur les valeurs de mesure,
- faible influence des signaux issus de X sur ceux issus de Y et inversement,
- possibilité de modifier le nombre et la répartition angulaire des aimants de la couronne en fonction des axes de références utilisés.

## Revendications

1. Capteur à champ magnétique stable comportant une partie fixe et une partie mobile caractérisé en ce que la partie mobile qui peut être fixée sur un câble comporte une couronne (8) formée d'aimants permanents (3) disposés radialement entre une bague magnétique intérieure (2) et une bague magnétique extérieure (4) et que la partie fixe est formée d'éléments de mesure (6,7) fixés sur un support délimitant un espace de mesure (10) dans lequel se déplace la couronne (8).

2. Capteur selon la revendication 1 caractérisé en ce qu'il comporte en outre des concentrateurs (11) placés sur le support (5).

3. Capteur selon l'une des revendications 1 à 2 caractérisé en ce qu'il comporte plusieurs aimants disposés sur deux axes de mesure x et y.

4. Capteur selon l'une des revendications 1 à 3 caractérisé en ce que les éléments de mesure peuvent être des capteurs à effet Hall, magnéto-résistifs, ultra-soniques.

5. Capteur selon l'une des revendications 1 à 4 caractérisé en ce que les éléments de mesure sont des éléments de mesure directe (6).

6. Capteur selon l'une des revendications 1 à 4 caractérisé en ce que les éléments de mesure (7) sont des couples d'éléments différentiels (Ca-Cb).

## Claims

1. Stable magnetic field sensor comprising a fixed part and a movable part, characterized in that the movable part, which may be fixed to a cable, comprises a crown (8) of permanent magnets (3) arranged radially between an inner magnetic ring (2) and an outer magnetic ring (4) and that the fixed part is formed by measurement elements (6, 7) fixed to a support which defines a measurement space (10) in which the crown (8) moves.

2. Sensor according to Claim 1, characterized in that it furthermore comprises concentrators (11) placed on the support (5).

3. Sensor according to either of Claims 1 and 2, characterized in that it comprises several magnets arranged on two measurement axes x and y.

4. Sensor according to one of Claims 1 to 3, characterized in that the measurement elements may be Hall-effect magnetoresistive or ultrasonic sensors.

5. Sensor according to one of Claims 1 to 4, characterized in that the measurement elements are direct measurement elements (6).

6. Sensor according to one of Claims 1 to 4, characterized in that the measurement elements (7) are pairs of differential elements (Ca - Cb).

## Patentansprüche

1. Meßfühler mit stabilem magnetischem Feld mit einem feststehenden Teil und einem beweglichen Teil, **dadurch gekennzeichnet**, daß der bewegliche, an einem Kabel befestigbare Teil einen Kragen (8) aufweist, der aus Permanentmagneten (3) gebildet ist, die kreisförmig zwischen einem inneren magnetischen Ring (2) und einem äußeren magnetischen Ring (4) angeordnet sind, und daß der feststehende Teil aus Meßelementen (6, 7) ausgebildet ist, die an einem Träger befestigt sind, der einen Meßraum (10) begrenzt, in dem sich der Kragen (8) versetzt.

2. Meßfühler nach Anspruch 1, dadurch gekennzeichnet, daß er weiterhin Bündelungsmittel (11) aufweist, die an dem Träger (5) angeordnet sind.

3. Meßfühler nach einem der Ansprüche 1 bis 2, dadurch gekennzeichnet, daß er mehrere auf zwei Meßachsen x und y angeordnete Magnete aufweist.

4. Meßfühler nach einem der Ansprüche 1 bis 3, dadurch gekennzeichnet, daß die Meßelemente auf dem Hall-Effekt basierende Meßfühler, Magnetwiderstands- oder Ultraschallmeßfühler sind.

5. Meßfühler nach einem der Ansprüche 1 bis 4, dadurch gekennzeichnet, daß die Meßelemente direkt arbeitende Meßelemente (6) sind.

6. Meßfühler nach einem der Ansprüche 1 bis 4, dadurch gekennzeichnet, daß die Meßelemente (7) Paare differentieller Elemente (Ca-Cb) sind.
